# EUROPÄISCHE PATENTSCHRIFT

(11) **EP 2 797 211 B1**
(45) Veröffentlichungstag und Bekanntmachung des Hinweises auf die Patenterteilung: **17.10.2018**
(21) Anmeldenummer: 14160355.5
(22) Anmeldetag: 17.03.2014
(51) Int. Cl.: H02K 11/00, H02K 11/25, H02K 3/30

(54) **Elektrische Maschine sowie Verfahren zur Herstellung einer elektrischen Maschine**
Electrical machine and method for manufacturing an electrical machine
Machine électrique et procédé de fabrication d'une machine électrique

(30) Priorität: 27.04.2013 DE 102013007331
(43) Veröffentlichungstag der Anmeldung: 29.10.2014
(73) Patentinhaber: Volkswagen Aktiengesellschaft, 38440 Wolfsburg (DE)
(72) Erfinder: Behrendt, Reiner Nico, OT Nitzow D-39539 Havelberg (DE)

(56) Entgegenhaltungen:
- DE-A1- 19 936 218
- DE-A1- 19 936 218
- DE-C2- 3 150 909
- DE-T2- 69 323 126
- US-A- 3 238 157

## Beschreibung

Die Erfindung betrifft eine elektrische Maschine, welche einen Stator, einen Rotor, einen Sensor und mit dem Sensor verbundene Anschlussleitungen umfasst, wobei der Sensor und wenigstens ein Teil der Anschlussleitungen innerhalb des Stators oder Rotors angeordnet sind. Ferner betrifft die Erfindung ein Verfahren zur Herstellung einer elektrischen Maschine.

Elektrische Maschinen (elektromechanische Wandler), beispielsweise elektrische Antriebsmotoren für Kraftfahrzeuge, Starter, Generatoren oder Starter-Generatoren, wandeln elektrische Energie in mechanische Energie (Motoren) beziehungsweise mechanische Energie in elektrische Energie (Generatoren) um. Diese elektromechanische Umwandlung beruht auf elektromagnetischer Induktion. Derartige elektrische Maschinen umfassen einen feststehenden Stator (Ständer), der einen Statorkern und eine darauf aufgebrachte Statorwicklung umfasst, sowie eine beweglich Komponente, die bei dem häufigsten Bautyp als Rotor (Läufer) ausgebildet ist. Der Rotor ist drehbar und typischerweise innerhalb des ringförmig ausgebildeten Stators gelagert. Dabei wird aufgrund des bewegten Magnetfeldes des Rotors ein Stromfluss in der Statorwicklung erzeugt (Generator), beziehungsweise aufgrund des durch den Stator erzeugten Magnetfeldes die mechanische Bewegung/Rotation des Rotors bewirkt (Motor).

Elektrische Maschinen erzeugen während ihres Betriebs Wärme aufgrund des dielektrischen Verlusts. Die Entstehung von Verlustwärme trifft insbesondere auf die Statorwicklung zu. So genannte Wickelköpfe der Statorwicklung stellen dabei einen durch eine Überhitzung besonders gefährdeten Teil der Statorwicklung dar. Wickelköpfe von Statoren bestehen in der Regel aus Kupferdrahtwicklungen, die eine durchgängige Primärbeschichtung zur elektrischen Isolierung sowie zumeist eine Sekundärbeschichtung zur mechanischen/geometrischen Stabilisierung, zum chemischen Schutz aber auch zur Wärmeableitung aufweisen. Die heute für die höchstmögliche Isolierklasse H eingesetzten Materialien für die Primär- und Sekundärbeschichtung der Statorwicklung sind bis zu Temperaturen von maximal 180 °C belastbar. Im Betrieb können jedoch Temperaturen von über 200 °C im Wickelkopf auftreten. Die Wärme in den Wicklungen entsteht insbesondere durch kurzzeitige Spannungsspitzen, die schnell ansteigen, das heißt eine hohe Flankensteilheit ("Spannungsflanken") aufweisen. Die seitlichen Wickelschenkel der Statorwicklung können über die dicht anliegenden Statorbleche vergleichsweise gut gekühlt werden. Hingegen liegen die Wickelköpfe meist frei und werden daher nicht oder nur zum Teil aktiv gekühlt. Die Erwärmung führt zu einer Erhöhung des dielektrischen Verlustfaktors, wodurch der Wirkungsgrad verschlechtert und noch mehr elektrische Energie in Wärme umgewandelt wird. Dieser sich selbst beschleunigende Effekt kann zu elektrischen Durchschlägen (Teilentladungen) im Isolationsmaterial der Primärbeschichtung führen. Die Teilentladungen führen zu einer Verkürzung der Lebensdauer der elektrischen Maschine, im schlimmsten Fall sogar zur ihrem Ausfall.

Ein weiterer Problemkreis elektrischer Maschinen betrifft die sensorische Temperaturüberwachung der Maschine beziehungsweise ihrer Komponenten. Zur Temperaturüberwachung von Wickelköpfen von Statoren werden üblicherweise Sensoren, meist geschützt durch eine PTFE-Umhüllung (Polytetrafluorethylen), in die Wicklung eingebracht. Die Sensoren umfassen im einfachsten Fall ein Bimetall, zumeist aber einen Halbleiter ("Kaltleiter" PTC oder "Heißleiter" NTC) oder einen Platinwiderstand (PT100). In der genannten Reihenfolge steigt die Genauigkeit des Sensors, jedoch auch seine Kosten. Mit Ausnahme des Bimetallsensors nutzen alle Systeme die vorzugsweise lineare Zunahme des Ohm'schen Widerstands mit der Temperatur. Ideale Sensoren sollten eine möglichst lineare Abhängigkeit zwischen Temperatur und Widerstand im interessierenden Temperaturbereich aufweisen, das heißt eine möglichst lineare Kennlinie, und schnell auf die Temperaturänderung ansprechen, um rasch eine Kühlmaßnahme auszulösen. Die bekannten Sensoren weisen häufig keine lineare Kennlinie über einen größeren Temperaturbereich, beispielsweise von -20 bis 200 °C, auf. Zudem sind ein schnelleres Ansprechverhalten und längere Lebensdauern der Sensoren wünschenswert.

Beispielsweise NTC-Sensoren können von einer spröden, mechanisch empfindlichen Bleiglas-Ummantelung umgeben sein, welche bei Stößen etc. zu einer Rissbildung und damit zum Ausfall des Sensors neigt. Solche NTC-Sensoren mit Bleiglas-Ummantelung werden zum Schutz der Ummantelung häufig in eine PTFE-Hülse (Teflon-Hülse) eingeschoben.

Der Sensor selbst ist jedoch in dieser Hülse häufig nicht fixiert und somit mechanischen Einflüssen ausgesetzt. Zudem ergeben sich bei dieser Konstruktion noch weitere Nachteile. So ist bekannt, dass die PTFE-Hülsen auch Anschlussdrähte für den Sensor einfassen können. PTFE zeigt ein ausgeprägtes Kaltfluss-Verhalten ("Kriechen"). Beim Betrieb der elektrischen Maschine erwärmt sich der Draht des Wickelkopfes unter entsprechender Wärmeausdehnung. Zudem weist PTFE einen hohen Wärmeausdehnungskoeffizienten und bei 19 °C eine Umwandlung der Kristallstruktur auf. Daraus ergibt sich als eine mögliche Folge eine Lockerung des Sensors innerhalb der Hülse. Dies kann wiederum zu einer ungenauen Temperaturmessung im Wickelkopf, zum Eindringen von Feuchtigkeit und anderen Medien sowie zu einer Beschädigung der Bleiglas-Ummantelung durch ein Hin-und Herschlagen des gelockerten Sensors führen.

Die DE 199 36 218 A1 beschreibt ein Verfahren, bei dem temperaturempfindliche Sensoren während des Formens eines Wickelkopfes einer Statorwicklung eines Elektromotors in den Wickelkopf eingebracht werden. Anschlussleitungen des Sensors können PTFE-überzogene Litzen aufweisen, welche von einem Hüllschlauch ummantelt sind. Der Hüllschlauch dient zum mechanischen Schutz der Anschlussleitungen während des Formens des Wickelkopfs, während der PTFE-Überzug zur elektrischen Isolierung dient. Ferner können die Litzen der Anschlussleitungen mit einer Polyimid aufweisenden Folie bandagiert werden.

Zudem beschreibt die DE 693 23 126 T2 einen Sensor zum Einsetzen in die Wicklungen eines elektrischen Motors. Der Sensorkopf (ein Thermistor) des Sensors befindet sich in einer elektrisch isolierenden Ummantelung z. B. einer Muffe. Für die Ummantelung können z. B. Polyvinylidenfluorid (PVDF), ein Polyamidharz, Polyethylenterephthalat (PET) oder Polytetrafluorethylen (PTFE) zum Einsatz kommen. Der Sensorkopf und angrenzende Endabschnitte von Anschlussleitungen sind von einem ausgehärteten Elastomer umgeben. Das Elastomer dient zur Verteilung und Absorption der Aufprallkräfte. Eine zweite Muffe grenzt an die Ummantelung an, umschließt die Anschlussleitungen und weist eine Adhesivauskleidung auf. Das Adhesiv kann während eines Schrumpfens der zweiten Muffe in eine Spalte zwischen den Anschlussleitungen hineinfließen.

Ferner beschreibt die DE 2 112 152 C ein Isoliermaterial aus mehreren miteinander verklebten Schichten aus einer Polyimidfolie. Das Isoliermaterial umgibt z. B. einen metallischen Leiter.

In der US 3,537,053 ist die Verwendung von Polyimid-Folien, auch mit Fluorpolymer-Schichten, wie z. B. Copolymeren aus Hexafluorpropylen und Tetrafluorethylen (FEP), für die Ummantelung von Anschlussleitungen für Temperatursensoren angegeben. Zudem ist die Platzierung in einer Motorwicklung offenbart.

Die EP 0 811 483 A1 beschreibt eine mehrschichtige Polyimid-Fluorpolymer-Isolierung. Die Isolierung umfasst eine Polyimid-Copolymer-Grundschicht, auf dessen beiden Seiten FEP-Schichten haften. Zudem umfasst die Isolierung eine FEP-PTFE-Schicht, welche an wenigstens einer der FEP-Schichten haftet, und eine überlagernde Schicht aus ungesintertem PTFE. Die Isolierung kann zur Kabelisolation verwendet werden und zeichnet sich durch ihren Widerstand gegenüber Durchtrennung aus.

Die EP 0 056 510 A1 schlägt unter anderem eine Ummantelung eines Kupferleiters mittels einer ersten Schicht vor, welche einen FEP beschichteten Polyimid(PI)-Film aufweist. Zudem weist die Ummantelung eine zweite Schicht aus Polyimid, eine dritte Schicht aus Polyvinylidenfluorid (PVDF) und eine abschließende Schicht aus Acrylat auf.

Ferner schlägt die DE 32 10 123 A1 eine Isolierung von Anschlussdrähten eines Temperatursensors vor. Die Anschlussdrähte sind von Isolierschläuchen aus Silikonkautschuk umgeben, welche ihrerseits von einem Schrumpfschlauch gehalten werden.

Die DE 10 2009 044 532 A1 beschreibt ein Verfahren zum Herstellen von Gegenständen, mit einer verhältnismäßig festen Kunststoff-Lage und wenigstens einer weiteren Lage aus geschäumtem Kunststoff, wobei zuerst die feste Kunststoff-Lage im Spritzgießverfahren hergestellt wird und dann in einer größeren oder einer vergrößerten Form die geschäumte Lage durch Einspritzen des aufschäumenden Kunststoffes erzeugt wird. Der geschäumten Lage werden vor dem eigentlichen Spritzgießvorgang so genannte Mikrohohlkugeln aus Kunststoff mit einer Treibgasfüllung zugeführt.

Zudem beschreibt die DE 10 2007 023 982 B4 einen Schmelzklebstoff, welchem bereits expandierte Mikrohohlkugeln zugesetzt sind. Ein Schmelz- und/oder Erweichungsbereich eines polymeren Hüllmaterials der expandierten Mikrohohlkugeln liegt dabei oberhalb der Auftrags- bzw. Erweichungstemperatur des Schmelzklebstoffs. Die expandierten Mikrohohlkugeln dienen zur Verbesserung von Eigenschaften des Schmelzklebstoffs. Darunter fallen z. B. eine Dichtereduktion, eine verbesserte Verstreichbarkeit, sowie verbesserte rheologische und/oder mechanische Eigenschaften.

Die DE 10 2006 056 645 B4 beschreibt eine Schutzvorrichtung für längliche Körper, insbesondere für Kabelbäume, Kabel oder Leitungen. Die Schutzvorrichtung umfasst eine erste, innere Schutzschicht und eine zweite Schutzschicht, welche die erste Schutzschicht umgibt. Die erste Schutzschicht ist ein gewirkter, gewebter, gestrickter oder geflochtener Schlauch aus Glasseidenfäden bzw. -fasern oder Glasseidenfäden und Kunststofffäden. Die zweite Schutzschicht ist eine Kunststoffschicht (beispielsweise aus einem Silikonkautschuk), wobei der Kunststoff mit feinverteilten Metallpartikeln und/oder Graphit und/oder Mikroglaskugeln oder Kunststoffhohlkugeln gefüllt ist.

Aus der DE 31 50 909 C2 ist eine Füllsubstanz zum Längsdichten elektrischer und/oder optischer Kabel und Leitungen bekannt. Die Füllsubstanz umfasst Hohlkörper kleineren Rauminhaltes, welche mindestens zum Teil von einem viskosen Stoff umhüllt sind. Die Hohlkörper lassen sich bei Krafteinwirkung auf ein Volumen zusammendrücken, das geringer als die Hälfte des Ursprungsvolumens ist.

Des Weiteren ist aus der DE 32 46 668 A1 eine Dichtungsmasse zum Abdichten von Kabelmuffen bekannt. Die Dichtungsmasse umfasst ein dauerplastisches Grundmaterial, welchem elastische Hohlkörperchen hinzugefügt wurden, wodurch die Deformierbarkeit und die Kompressibilität vorteilhaft beeinflusst werden.

Auch die DE 195 16 970 A1 beschreibt ein, mit einer Füllmasse gefülltes Kabel. Die Füllmasse befindet sich zwischen elektrischen Adern und einer äußeren Isolierung und kann hochelastische Kügelchen, insbesondere Hohlkügelchen umfassen.

Aus der US 3,238,157 ist ein aufschäumbares Silikonelastomer, insbesondere ein Polysiloxan, bekannt. Nach Aufschäumen dehnt sich das Silikonelastomer beim Härten aus. Es wird eine im Silikonelastomer Hohlräume erzeugende Substanz eingesetzt, welche nach dem Aufschäumen aus dem Silikonelastomer entfernt wird. Beispielsweise handelt es sich bei der Hohlräume erzeugenden Substanz um sublimierbare Festkörper.

Bisher besteht jedoch bei den jetzigen Sensor-Anordnungen keine Möglichkeit, Wärmedehnungen dauerhaft auszugleichen. Insbesondere die oben erörterten, nachteiligen Eigenschaften von PTFE-Hülsen, die zu Änderungen der Hülsen-Geometrie führen, können nicht ausreichend ausgeglichen werden. Es ist daher möglich, dass sich der Sensor während des Betriebs der elektrischen Maschine lockert, was zu den oben genannten Folgen führen kann.

Der Erfindung liegt daher die Aufgabe zugrunde, eine elektrische Maschine zu schaffen, welche eine erhöhte Ausfallsicherheit eines, innerhalb der Maschine angeordneten Sensors aufweist. Ferner soll ein Verfahren zur Herstellung einer solchen elektrischen Maschine geschaffen werden.

Diese Aufgaben werden durch eine elektrische Maschine sowie ein Verfahren zur Herstellung einer elektrischen Maschine gemäß den unabhängigen Merkmalen gelöst. Bevorzugte Ausgestaltungen der Erfindung ergeben sich aus den in den Unteransprüchen genannten Merkmalen.

Die erfindungsgemäße elektrische Maschine umfasst einen Stator, einen Rotor, einen Sensor und mit dem Sensor verbundene Anschlussleitungen, wobei der Sensor und wenigstens ein Teil der Anschlussleitungen innerhalb des Stators oder Rotors angeordnet sind. Kennzeichnend umfasst die elektrische Maschine eine Füllung, wobei die Füllung eine Matrix und innerhalb der Matrix verteilte, mit einem Expansionsmittel gefüllte, expandierte Hohlkörper aufweist, und der wenigstens eine Teil der Anschlussleitungen von der Füllung zumindest teilweise umschlossen ist.

Der Sensor, welcher vorzugsweise ein Temperatursensor, insbesondere ein NTC-Sensor (Negative Temperature Coefficient also ein Heißleiter) oder ein PTC-Sensor (Positive Temperature Coefficient also ein Kaltleiter) ist, befindet sich innerhalb des Stators oder innerhalb des Rotors. Das bedeutet mit anderen Worten, dass im Stator oder Rotor ein Hohlraum vorgesehen sein kann, in welchem der Sensor angeordnet ist. Die mit dem Sensor verbundenen Anschlussleitungen sind somit wenigstens zu einem Teil ebenfalls innerhalb dieses Hohlraums angeordnet, wobei ein anderer Teil der Anschlussleitungen aus dem Hohlraum austreten kann. Der wenigstens eine Teil der Anschlussleitungen kann von der Füllung derart zumindest teilweise umschlossen sein, dass die Füllung zwischen den Anschlussleitungen und dem Stator oder zwischen den Anschlussleitungen und dem Rotor angeordnet ist. Somit ist zwischen den Anschlussleitungen auf der einen Seite und dem Stator oder Rotor auf der anderen Seite zumindest ein Teil des Hohlraums mit der Füllung ausgefüllt. Die Füllung kann den wenigstens einen Teil der Anschlussleitungen auch rundumlaufend umschließen. Dabei können zwischen der Füllung und den Anschlussleitungen und/oder der Füllung und dem Stator oder dem Rotor noch weitere Mittel, insbesondere Umhüllungen und/oder Schichten, angeordnet sein.

Die Füllung umfasst eine Matrix und Hohlkörper (so genannte Mikro-Hohlkörper), welche insbesondere Hohlkugeln (also Mikro-Hohlkugeln) sind. Die Hohlkörper sind innerhalb der Matrix verteilt, mit anderen Worten in der Matrix eingebettet. Das Expansionsmittel ist dazu ausgebildet, insbesondere durch Erwärmung sein Volumen zu vergrößern, insbesondere zu vervielfachen, also zu expandieren.

Die gemäß der erfindungsgemäßen elektrischen Maschine vorliegenden Hohlkörper sind expandierte Hohlkörper. Es kann prinzipiell zwischen expandierbaren und expandierten Hohlkörpern unterschieden werden. Die expandierbaren Hohlkörper weisen bevorzugt einen durchschnittlichen Durchmesser von 3 bis 100 µm, insbesondere von 5 bis 50 µm auf. Als expandierte Hohlkörper werden die expandierbaren

Hohlkörper nach einer Expansion verstanden. Die expandierten Hohlkugeln können einen vielfachen Durchmesser der expandierbaren Hohlkörper aufweisen.

Bei der Herstellung der erfindungsgemäßen elektrischen Maschine können die, zu diesem Zeitpunkt noch expandierbaren Hohlkörper in den Stator oder den Rotor eingebracht und erst innerhalb der Maschine durch Erwärmen expandiert werden. Beim Erwärmen der Hohlkörper kann dessen Außenhülle erweicht und gleichzeitig der Druck innerhalb des Hohlkörpers durch das ebenfalls erwärmte Expansionsmittel erhöht werden. Dies führt zur Expansion der Hohlkörper. Das Volumen der Hohlkörper kann sich dabei bevorzugt wenigstes um ein 0,25Faches (25 % Volumenzunahme), ferner bevorzugt wenigstens um ein 2Faches, insbesondere wenigstens um ein 4Faches erhöhen. In der Theorie kann sich das Volumen bei einer Expansion in einem Vakuum auch um ein 10Faches erhöhen.

Während einer, an die Expansion anschließenden Abkühlung der Hohlkörper, verfestigen sich dessen Außenhüllen bevorzugt wieder, sodass das expandierte Volumen der Hohlkörper im Wesentlichen aufrechterhalten werden kann.

Durch die Expansion der Hohlkörper kann der Druck innerhalb der Matrix erhöht werden. Da beim Abkühlen das expandierte Volumen der Hohlkörper im Wesentlichen erhalten bleiben kann, kann auch nach dem Abkühlen ein erhöhter Druck innerhalb der Matrix verbleiben, welcher die Anschlussleitungen innerhalb des Stators oder Rotors fixiert. Durch diesen Druck innerhalb der Matrix können auch Wärmedehnungen des Stators, des Rotors, der Anschlussleitungen, oder von dazwischen angeordneten Bauteilen, insbesondere Hüllen, ausgeglichen werden. Durch die Fixierung der Anschlussleitungen wird auch eine Bewegung des Sensors während des Betriebs der elektrischen Maschine verhindert oder zumindest verringert.

Vorzugsweise ist vorgesehen, dass die Füllung im Wesentlichen bis zum Sensor heranreicht, insbesondere den Sensor kontaktiert. Durch diese Ausgestaltung ist sichergestellt, dass der Sensor optimal fixiert ist. Je nach Typ des Sensors kann der Sensor vorteilhaft auch in der Füllung eingebettet sein. Dabei muss jedoch auf eine erhöhte thermische Isolation durch die Hohlkörper geachtet werden, was insbesondere bei Temperatursensoren von Bedeutung ist.

Gemäß einer bevorzugten Ausgestaltung der Erfindung ist vorgesehen, dass eine Außenhülle der Hohlkörper einen Kunststoff, insbesondere ein Copolymer mit einem Magnesiumhydroxid als Füllstoff aufweist oder aus einem solchen besteht. Dieser Kunststoff ermöglicht eine Expansion durch Erweichen und/oder Schmelzen ab einer bestimmten Temperatur und ein Erstarren bei einem Unterschreiten einer bestimmten Temperatur. Dadurch kann ein Volumen eines expandierten Hohlkörpers zumindest im Wesentlichen beibehalten werden.

Vorzugsweise umfasst oder besteht das Expansionsmittel aus einem Fluid oder einem Fluidgemisch, vorzugsweise einem Gas oder einem Gasgemisch, insbesondere einem Kohlenwasserstoff oder einem Kohlenwasserstoffgemisch. Insbesondere bei einem Phasenübergang von flüssig zu gasförmig kann bei derartigen Expansionsmitteln eine signifikante Volumenvergrößerung erfolgen.

Bevorzugt umfasst die elektrische Maschine eine wenigstens einen Teil der Anschlussleitungen und insbesondere den Sensor umlaufend ummantelnde Hülle. Die Hülle ist bevorzugt zwischen der Füllung und dem Stator oder dem Rotor angeordnet. Ferner kann die Hülle in einem Wickelkopf, insbesondere des Stators angeordnet sein. Das Ummanteln erfolgt durch die Hülle insbesondere schlauchförmig. Ferner bevorzugt ist die Hülle als Schlauch (oder als Hülse) ausgebildet. Zudem kann die Hülle auch mittels Bandagen, wie beispielsweise in der DE 199 36 218 A1 beschrieben, gebildet werden. Die Hülle kann mehrere Vorteile mit sich bringen. Ein Vorteil besteht darin, dass die Hülle die Füllung von dem Stator oder Rotor trennt. So kann die Hülle auch den mittels der Füllung geschützten Sensor, vorzugsweise mit Ausnahme der Spitze des Sensors (z. B. einer Temperatursensorspitze) vom Wickelkopf trennen. Dies bewirkt, dass die Füllung nicht am Stator oder Rotor anhaften kann. Somit ist ein Austausch des Sensors durch ein einfaches Herausziehen mitsamt der Hülle aus dem Stator oder Rotor möglich. Wenn die Hülle auch den Sensor ummantelt, wird zudem der Sensor, insbesondere durch elastische Eigenschaften der Hülle vor Stößen geschützt. Die Hülle entfaltet somit eine mechanisch dämpfende Wirkung. Die Hülle ist insbesondere eine elektrisch isolierende Hülle.

Gemäß einer bevorzugten Ausgestaltung der Erfindung ist vorgesehen, dass ein Material der Hülle einen Kunststoff, insbesondere Polyetherimid (PEI), Polyimid (PI), Polyphenylensulfid (PPS), Polyetheretherketon (PEEK), ein Fluorpolymer, insbesondere Perfluorethylenpropylen (FEP), Polytrifluorethylen-Copolymere, Polytetrafluorethylen (PTFE) oder Polyvinylidenfluorid (PVDF) umfasst oder aus diesem besteht. Die Hülle kann insbesondere durch Polyimid-Folien-Bandagen oder durch einen PTFE-Schlauch gebildet sein.

Ferner bevorzugt ist vorgesehen, dass die Hülle eine Polytetrafluorethylen(PTFE)-Beschichtung aufweist. Insbesondere weist in diesem Fall die Hülle ein Polyimid auf oder besteht aus diesem. Ferner kann die Hülle eine aus Polyimid-Bandagen gebildete Hülle sein, welche die PTFE-Beschichtung aufweist. Die PTFE-Beschichtung kann während der Herstellung beispielsweise mittels eines Sprays aufgetragen werden. Die PTFE-Beschichtung verhindert unter anderem ein Anhaften der Hülle an dem Stator oder dem Rotor während der Herstellung der elektrischen Maschine.

Vorzugsweise ist der Sensor innerhalb einer Wicklung, insbesondere eines Wickelkopfes des Stators oder Rotors angeordnet. Durch diese Positionierung kann eine Temperatur der Wicklung, insbesondere des Wickelkopfs direkt gemessen werden. Dadurch wird eine möglichst genaue Temperaturmessung der Wicklung, insbesondere des Wickelkopfs ermöglicht.

Vorzugsweise umfasst oder ist die Matrix ein Elastomer, vorzugsweise ein Silikon, insbesondere ein Methyl-Polysiloxan-Elastomer, besonders bevorzugt ein Vinylmethyl-Polysiloxan-Elastomer oder ein Phenylvinylmethyl-Polysiloxan-Elastomer; oder ein zähmodifiziertes Epoxidharz. Zur Herstellung der oben stehenden Elastomere werden die entsprechenden Kautschuke, also ein Methyl-Polysiloxan-Kautschuk (MQ), besonders bevorzugt ein Vinylmethyl-Polysiloxan-Kautschuk (VMQ) oder ein Phenylvinylmethyl-Polysiloxan-Kautschuk (PVMQ) verwendet. Das zähmodifizierte Epoxidharz ist insbesondere ein mit Polypropylenglycol modifiziertes Epoxid, wie es beispielhaft in der DE 10 2009 028 180 A1 offenbart ist.

Ferner wird ein Fahrzeug zur Verfügung gestellt, welches die erfindungsgemäße elektrische Maschine, insbesondere als Antriebsmaschine des Fahrzeugs, umfasst. Das erfindungsgemäße Fahrzeug zeichnet sich durch eine erhöhte Ausfallsicherheit aufgrund der erfindungsgemäßen Fixierung des Sensors innerhalb der elektrischen Maschine aus.

Alternativ ist eine Fixierung des Sensors (insbesondere eines Temperatursensors) mittels der (bei der Herstellung expandierenden) Füllung und insbesondere in der Hülle zudem auch innerhalb von Klimaanlagen denkbar. Zudem ist diese Art der Fixierung auch bei Sensoren, welche besonderen mechanischen Belastungen ausgesetzt sind, z. B. innerhalb von Baumaschinen, vorstellbar. Zudem kann die Fixierung auch bei Sensoren, insbesondere Elektroden, welche z. B. für eine Gasmessung (z. B. von Kohlenmonoxid) dienen, zum Einsatz kommen. In allen genannten Anwendungen werden die Sensoren durch die oben stehend beschriebene Füllung besser geschützt.

Ferner wird ein Verfahren zur Herstellung einer elektrischen Maschine zur Verfügung gestellt, wobei das Verfahren die folgenden Schritte umfasst:
- Bereitstellen eines Stators oder eines Rotors, eines Sensors, von mit dem Sensor verbundenen Anschlussleitungen und einer Füllung, welche eine Matrix und innerhalb der Matrix verteilte, mit einem Expansionsmittel gefüllte Hohlkörper aufweist;
- Einbringen des Sensors, wenigstens eines Teils der Anschlussleitungen und der Füllung in den Stator oder den Rotor;
- Anschließendes Erwärmen der Hohlkörper auf eine Temperatur, welche höher als eine Expansions-Starttemperatur der Hohlkörper ist.

Die Matrix, also ein Matrix-Material ist beim Einbringen der Matrix nicht auf einen festen Zustand beschränkt, sondern kann vorzugsweise auch einen teilweise festen und/oder flüssigen (insbesondere zähflüssigen) Zustand aufweisen. So wird als ein Material der Matrix (Matrix-Material) vorzugsweise ein Kautschuk eingesetzt. Die Hohlkörper liegen beim Einbringen in den Stator oder Rotor in einem expandierbaren Zustand vor. Das Einbringen des Sensors, des wenigstens eines Teils der Anschlussleitungen und der Füllung in den Stator oder den Rotor kann in einen (gemeinsamen) Hohlraum im Stator oder Rotor erfolgen. Insbesondere bereits vor dem Schritt des Erwärmens kann der in den Stator oder den Rotor eingeführte Teil der Anschlussleitungen von der Füllung zumindest teilweise umschlossen sein. Ferner kann die Füllung zwischen den Anschlussleitungen und dem Stator oder dem Rotor angeordnet sein. Mittels des erfindungsgemäßen Verfahrens kann die erfindungsgemäße elektrische Maschine hergestellt werden.

Nach dem Einbringen der Füllung in den Stator oder Rotor wird durch das Erwärmen der Hohlkörper (insbesondere der Füllung) auf die Temperatur, welche höher als eine Expansions-Starttemperatur der Hohlkörper ist, die Expansion der Hohlkörper bewirkt. Durch die Expansion werden um die Anschlussleitungen herum angeordnete Hohlräume formschlüssig mit der Füllung gefüllt. Insbesondere steigt nach dem Füllen der Hohlräume der Druck innerhalb der Füllung weiter an.

Vorzugsweise weisen die expandierbaren Hohlkörper eine Expansions-Starttemperatur auf, welche größer als 70 °C und kleiner als 170 °C, insbesondere größer als 100 °C und kleiner als 155 °C, besonders bevorzugt größer als 120 °C und kleiner als 145 °C ist.

Insbesondere wird durch das Erwärmen der Füllung auch das Matrix-Material ausgehärtet. Dadurch kann mittels eines einzigen Erwärmungsvorgangs eine Expansion der Hohlkörper und ein Aushärten des Matrix-Materials erfolgen, wodurch Zeit eingespart wird.

Vorzugsweise ist eine Temperatur, welche zum Aushärten des Matrix-Materials erforderlich ist, kleiner als eine Zersetzungstemperatur der Hohlkörper. Die Zersetzungstemperatur der Hohlkörper ist bevorzugt größer als 100 °C, insbesondere größer als 150 °C, besonders bevorzugt größer als 185 °C. Dadurch kann eine Beschädigung der Hohlkörper durch das Aushärten des Matrix-Materials verhindert werden. Die Zersetzungstemperatur kann dabei z. B. kleiner als 230 °C sein.

Gemäß einer bevorzugten Ausgestaltung der Erfindung umfasst das Verfahren vor dem Einbringen (des Sensors) die vorangehenden Schritte
- des Beschichtens wenigstens eines Teils der Anschlussleitungen mit der Füllung; und insbesondere
- des Vorhärtens der Matrix der Füllung.
Das Vorhärten der Matrix erfolgt insbesondere anschließend an das Beschichten und vorzugsweise durch ein Erwärmen der Matrix. Vorzugsweise erfolgt das Erwärmen auf eine Temperatur, welche kleiner als die Expansions-Starttemperatur der Hohlkörper ist. Damit wird eine Expansion der Hohlkörper während des Vorhärtens der Matrix verhindert.
Durch das Vorhärten der Matrix wird die Handhabung während den darauf folgenden Herstellungsschritten vereinfacht.

Bevorzugt ist vorgesehen, dass das Verfahren ferner einen Schritt des umlaufenden Umhüllens mit einer Hülle wenigstens des Teils der Anschlussleitungen mitsamt der Füllung, und insbesondere des Sensors mit einer Hülle umfasst. Folglich wird zumindest jener Teil der Anschlussleitungen von der Hülle umhüllt, welcher mit der Füllung versehen ist. Insbesondere wird zudem auch der Sensor von der Hülle umhüllt, damit dieser durch die Hülle insbesondere vor Stößen geschützt ist.

Vorzugsweise ist vorgesehen, dass das Verfahren ferner einen, dem Einbringen des Sensors nachfolgenden Schritt des Beschichtens des Stators oder Rotors, vorzugsweise einer Wicklung, insbesondere eines Wickelkopfs des Stators oder Rotors mit einer Sekundärbeschichtung, insbesondere einer Sekundärharzbeschichtung umfasst. Dadurch, dass das Beschichten erst nach dem Einbringen des Sensors erfolgt, kann ein Platzhalter, welcher bisher anstatt des Sensors beim Beschichten verwendet wurde, eingespart werden. Insbesondere ist der Sensor beim Beschichten durch die, ihn umhüllende Hülle geschützt.

Bevorzugt erfolgt ein Aushärten der Sekundärbeschichtung (mittels eines Erwärmens des Stators oder Rotors) während des Erwärmens der Hohlkörper. In diesem Fall wird also der Stator oder Rotor derart erwärmt, dass ein Aushärten der Sekundärbeschichtung erfolgt, wobei durch diese Erwärmung auch die Füllung beim Erwärmen des Stators oder Rotors miterwärmt und somit die Hohlkörper expandiert werden. Gleichzeitig kann dabei auch die Matrix ausgehärtet werden. Die Sekundärbeschichtung bedeckt eine Primärbeschichtung, welche zur elektrischen Isolierung dient. Die darauf befindliche Sekundärbeschichtung dient üblicherweise der mechanischen und geometrischen Stabilisierung der Wicklung, um ein Verrutschen, Verschieben oder Aufscheuern zu verhindern. Zudem dient die Sekundärbeschichtung üblicherweise dem Schutz vor Versprödung und Rissbildung, dem Schutz von Medieneinwirkung durch Salzwasser, Öle oder anderen Betriebsstoffen, der elektrischen Isolation und zusätzlich auch der Wärmeableitung.

Die Erfindung wird nachfolgend in Ausführungsbeispielen anhand der zugehörigen Zeichnungen erläutert. Es zeigen:
- Figur 1: einen Stator einer elektrischen Maschine in einer perspektivischen Ansicht;
- Figur 2: einen Rotor der elektrischen Maschine in einer perspektivischen Ansicht;
- Figur 3: eine schematisierte teilweise Schnittansicht eines Teils der elektrischen Maschine gemäß einer bevorzugten Ausgestaltung der Erfindung;
- Figur 4: eine schematisierte teilweise Schnittansicht eines Teils der elektrischen Maschine gemäß einer bevorzugten Ausgestaltung der Erfindung während der Herstellung.

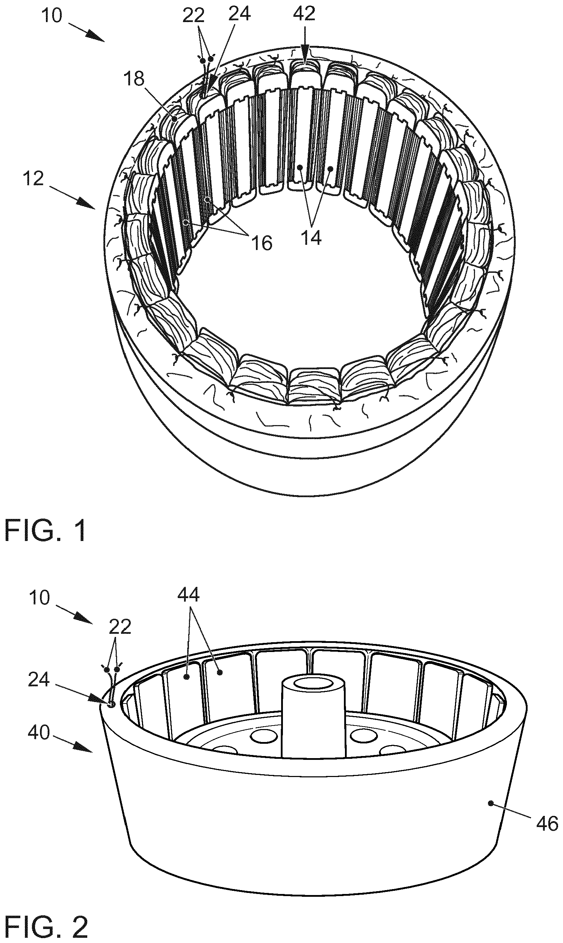

Figur 1 zeigt einen Stator 12 einer elektrischen Maschine 10 (also z. B. einen Elektromotor und/oder einen Generator) in einer perspektivischen Ansicht. Der Stator 12 weist einen Statorkern 14 in Form eines Blechpakets auf, um welchen Drähte in Form von Wicklungen 16 gewickelt sind. An den kurzen Enden der Wicklungen 16 sind Wickelköpfe 18 gebildet. Um beispielsweise eine Temperatur der Wickelköpfe 18 während des Betriebs der elektrischen Maschine 10 messen zu können, umfasst die elektrische Maschine 10 einen, in dieser Figur nicht sichtbarer Sensor 20. Der Sensor ist innerhalb des Stators 12, im abgebildeten Fall in einem der Wickelköpfe 18 angeordnet. Dazu kann der Stator 12 einen Hohlraum 24 aufweisen, in welchem der Sensor 20 angeordnet ist. Zum Messen der Temperatur kann der Sensor 20 als ein Temperatursensor, z. B. als ein NTC-Sensor (Negative Temperature Coefficient), also als ein Heißleiter ausgebildet sein. Zur Stromversorgung des Sensors 20 umfasst die elektrische Maschine 10 Anschlussleitungen 22, welche an einem Ende mit dem Sensor 20 verbunden sind und am anderen Ende aus dem Stator 12 herausragen.

Figur 2 zeigt einen Rotor 40 der elektrischen Maschine 10. Bei einer zusammengebauten elektrischen Maschine 10 befindet sich der gezeigte Rotor 40 innerhalb des Stators 12. Der Rotor 40 kann Magnete 44 und/oder Wicklungen 16 aufweisen. Zudem kann der Rotor 40 entweder anstatt dem Stator 12 oder auch zusätzlich zu dem Stator 12 einen Sensor 20 aufweisen. Der Sensor 20 und zumindest ein Teil der, mit ihm verbundenen Anschlussleitungen 22 können innerhalb eines Hohlraums 24 im Rotor 40 angeordnet sein. Wenn der Rotor 40 Wicklungen 16 umfasst, kann der Sensor 20 wie schon bezüglich des Stators 12 erörtert, in einem Wickelkopf 18 angeordnet sein.

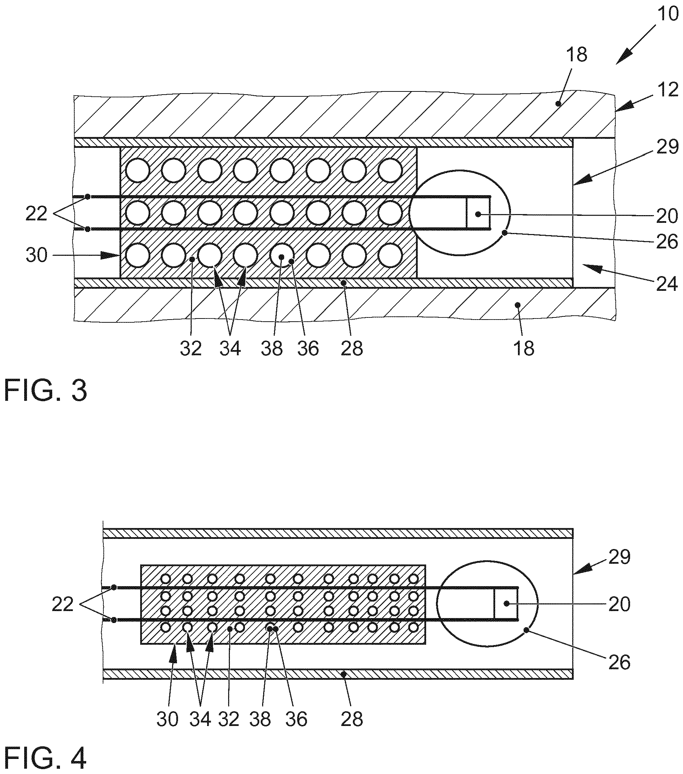

Figur 3 zeigt vergrößert eine schematisierte, teilweise Schnittansicht eines Teils der elektrischen Maschine 10 gemäß einer bevorzugten Ausgestaltung der Erfindung. In Figur 3 ist dazu ein Teil des Stators 12 gezeigt, jedoch ist das Gezeigte auch auf einen Rotor 40 übertragbar. Ein Teil des Wickelkopfs 18 ist schematisiert als ein homogenes Gebilde geschnitten dargestellt. Innerhalb des Hohlraums 24 im Wickelkopf 18 ist der Sensor 20 mit wenigstens einem Teil der Anschlussleitungen 22 angeordnet. Der Sensor 20 kann wie gezeigt von einer Glas-Ummantelung 26, z. B. einer Bleiglas-Ummantelung umgeben sein.

Zum Schutz vor mechanischen Beschädigungen der Glas-Ummantelung 26 kann diese, wie auch die Anschlussleitungen 22 von einer Hülle 28 ummantelt sein. Die Hülle 28 kann wie gezeigt schlauchförmig ausgebildet sein und weist somit eine Öffnung 29 auf, damit der Sensor 20 Temperaturänderungen innerhalb des Wickelkopfes 18 möglichst zeitnah folgen kann. Die Hülle 28 kann beispielsweise aus Polyimid (PI) oder Polytetrafluorethylen (PTFE) bestehen oder dieses umfassen. Beispielsweise kann das unter der Marke Kapton® (DuPont AG) vertriebene Polyimid (PI), die durch die Firma Krempel GmbH vertriebene Polyimid-Folie oder das unter der Marke Teflon® (DuPont AG) vertriebene Polytetrafluorethylen (PTFE) als Material für die Hülle 28 verwendet werden.

Die Hülle 28 umschließt eine Füllung 30 in welcher die Anschlussleitungen 22 eingebettet sind. Die Füllung 30 kann zudem die Glas-Ummantelung 26 kontaktieren und weist eine Matrix 32 mit darin verteilten und eingebetteten Hohlkörpern 34 auf. Eine dichtende Wirkung kann dadurch erzielt werden, indem die Füllung 30 die Hülle 28 in radialer Richtung ausfüllt.

Die Matrix 32 kann durch ein Elastomer, z. B. ein Silikon realisiert sein. Beispielsweise kann zur Herstellung der Matrix 32 ein Methyl-Polysiloxan-Kautschuk (MQ), und im Besonderen ein Vinylmethyl-Polysiloxan-Kautschuk (VMQ) oder ein Phenylvinylmethyl-Polysiloxan-Kautschuk (PVMQ) zum Einsatz kommen. Z. B. kann das unter der Marke RAKU-SIL® 10-S 13/9 (Rampf Giessharze GmbH & Co. KG) vertriebene Silikonelastomer verwendet werden. Zudem sind auch Mischungen der genannten Kautschuke denkbar.

Die Hohlkörper 34 können die gezeigte Kugelform aufweisen und auch als Mikrohohlkörper, bzw. als Mikrohohlkugeln bezeichnet werden. Die Hohlkörper 34 weisen jeweils eine Außenhülle 36 mit einem darin eingeschlossenen Expansionsmittel 38 auf, und liegen innerhalb der elektrischen Maschine 10 in einem expandierten Zustand vor, wodurch innerhalb der Matrix 32 ein erhöhter Druck herrscht. Die Matrix 32 ist also vorgespannt. Würde man die Füllung 30 aus der elektrischen Maschine 10 entfernen, so würde die Füllung 30 ein größeres Volumen, insbesondere einen größeren Durchmesser aufweisen als innerhalb der elektrischen Maschine 10. Auf die Hohlkörper 34 wird bezüglich der Herstellung der elektrischen Maschine näher eingegangen.

Durch den Einsatz der expandierten Hohlkörper 34 in der elastischen Matrix 32 erfolgt eine besonders anpassungsfähige Fixierung des Sensors 20 und der dazu gehörigen Anschlussleitungen 22 innerhalb des Wickelkopfs 18 und der Hülle 28. Dadurch wird der Sensor 20 vor schädigenden äußeren thermischen und/oder mechanischen Einflüssen (z. B. Vibrationen oder Stößen) sowie vor ansonsten möglicherweise eindringenden Medien, z. B. Feuchtigkeit geschützt. Änderungen der Geometrie der Hülle 28, wie diese beim Einsatz von PTFE z. B. durch eine Phasenumwandlung des PTFEs aus dem Stand der Technik bekannt sind, können ausgeglichen werden. Dies erfolgt durch die, mittels den expandierten Hohlkörpern 34 vorgespannte Matrix 32, welche somit entstehende Toleranzen puffern kann. Damit wird eine Lockerung des Sensors 20 verhindert und insgesamt das Ausfall-Risiko des Sensors 20 minimiert.

Im Folgenden wird das erfindungsgemäße Verfahren zur Herstellung der elektrischen Maschine 10 gemäß einer bevorzugten Variante beschrieben.

Demnach kann zunächst ein Teil der Anschlussleitungen 22 mit der Füllung 30 beschichtet werden. Die Füllung umfasst wie bereits beschrieben eine Matrix 32 und Hohlkörper 34, welche innerhalb der Matrix 32 verteilt sind. Ein Matrix-Material der Matrix 32 umfasst ein aushärtbares Material oder besteht aus diesem und kann beim Beschichten der Anschlussleitungen 22 flüssig (z. B. zähflüssig) sein.

Das Expansionsmittel 38 innerhalb der Hohlkörper 34 ist derart gewählt, dass es durch eine Erwärmung sein Volumen vergrößert, insbesondere vervielfacht, das Expansionsmittel also expandiert. Das Expansionsmittel 38 kann z. B. ein Kohlenwasserstoffgemisch sein, welches 2,2,4-Trimethylpentan und/oder Isobutan umfasst.

Es kann prinzipiell zwischen expandierbaren (vor einer Expansion) und bereits expandierten Hohlkörpern 34 (nach einer Expansion) unterschieden werden.

Figur 4 zeigt vergrößert eine schematisierte, teilweise Schnittansicht eines Teils der (noch nicht fertig hergestellten) elektrischen Maschine 10 während der Herstellung gemäß einer bevorzugten Ausgestaltung der Erfindung. Die Hohlkörper 34 liegen als expandierbare Hohlkörper 34 vor. In diesem expandierbaren Zustand liegen die Hohlkörper 34 auch beim Beschichten der Anschlussleitungen 22 vor. Die expandierbaren Hohlkörper 34 können z. B. eine Partikelgröße, also einen Durchmesser von 28 bis 38 Mikrometer aufweisen. Dieselben, aber bereits expandierten Hohlkörper 34 können einen vielfachen Durchmesser der expandierbaren Hohlkörper aufweisen.

Die Expansion der Hohlkörper 34 erfolgt bei Temperaturen, welche größer als eine so genannte Expansions-Starttemperatur sind. Gemäß zweier Beispiele expandierbarer Mikrohohlkörper können diese Expansions-Starttemperaturen zwischen 122 °C und 132 °C oder zwischen 133 °C und 143 °C liegen.

Nach dem Beschichten der Anschlussleitungen 22 kann die Matrix 32 vorgehärtet werden. Dies erfolgt zweckmäßigerweise bei einer Temperatur, welche kleiner als die Expansions-Starttemperatur ist. Beispielsweise kann das Vorhärten durch ein Erwärmen der Matrix 32 auf eine Temperatur von ca. 65 °C und ein Aufrechterhalten dieser Temperatur über einen Zeitraum von ca. 10 Minuten erfolgen. Als Matrix-Material eignen sich besonders die oben erwähnten Silikone. Durch das Vorhärten wird die Handhabbarkeit der mit der Füllung 30 beschichteten Anschlussleitungen 22 erhöht. Als nächster Schritt können der Sensor 20 und die Anschlussleitungen 22 mitsamt der Füllung 30 in die Hülle 28 eingeführt werden. Das Vorhärten der Matrix 32 ist zu diesem Zweck derart erfolgt, dass ein bequemes Einführen des Sensors 20 in die Hülle 28 möglich ist. Wenn die Hülle 28 wie oben beschrieben durch Polyimid, welches z. B. als Polyimid-Folie verarbeitet werden kann, gebildet wird, kann die Hülle 28 ferner mit einer PTFE-Beschichtung versehen werden. Die PTFE-Beschichtung kann mittels eines PTFE-Sprays auf die Hülle 28 aufgebracht werden. Beispielsweise wird hierzu das unter der Marke WIKO® (GlueTec Industrieklebstoffe GmbH & Co. KG) vertriebene PTFE-Spray verwendet.

Anschließend wird der Sensor 20 mit der Hülle 28 im Stator 12 oder Rotor 40, im Speziellen in einem seiner Wickelköpfe 18 positioniert. Im folgenden wird auf eine Positionierung innerhalb des Stators 12 eingegangen. Für den Rotor 40 gelten analoge Schritte. Danach werden die Hohlkörper 34 auf eine Temperatur, welche größer als die Expansions-Starttemperatur ist, erwärmt, z. B. indem der Stator 12 als Ganzes erwärmt wird. Dadurch expandieren die expandierbaren Hohlkörper 34, wodurch der Hohlraum 24 um die Anschlussleitungen 22 herum (formschlüssig) mit der Füllung 30 gefüllt wird. Somit wird die Füllung 30 von dem in Figur 4 gezeigten Zustand auf den in Figur 3 gezeigten Zustand übergeführt. Gleichzeitig härtet durch das Erwärmen auch die Matrix 32 aus.

Ein besonderer Vorteil während der Herstellung der elektrischen Maschine 10 kann zudem dann entstehen, wenn das Erwärmen der Matrix 32 und der Hohlkörper 34 während eines Aushärtens einer Sekundärbeschichtung 42 (z. B. eine Sekundärharzbeschichtung) erfolgt. Eine für das Aushärten der Sekundärbeschichtung 42 erforderliche Temperatur kann ca. 140 °C bis 160 °C betragen. Dadurch kann das Erwärmen der Füllung 30 im selben Schritt mit dem Erwärmen der Sekundärharzbeschichtung 42 oder auch direkt daran anschließend erfolgen. Durch das Erwärmen des Stators 12 erfolgt also die Expansion der Hohlkörper 34, das Aushärten der Matrix 32 und auch das Aushärten der Sekundärbeschichtung 42.

Zudem wurde bisher vor dem Beschichten mit der Sekundärbeschichtung ein Platzhalter in den Hohlraum 24 eingesetzt. Dieser verhinderte bisher, dass beim Beschichten die Sekundärbeschichtung 42 in den Hohlraum 24 eindringt. Für den Platzhalter musste bisher ein relativ teures Material, z. B. PTFE verwendet werden, damit die Sekundärbeschichtung 42 nicht an dem Platzhalter anhaftet. Bisher wurde der Platzhalter nach der Beschichtung entfernt und durch den Sensor 20 mitsamt der Hülle 28 ersetzt. Dadurch, dass sich gemäß dem oben beschriebenen Verfahren der Sensor 20 mitsamt der Füllung 30 beim Beschichten bereits im Stator 12 befindet, kann auf den Platzhalter verzichtet werden. Dadurch, dass an den für die Hülle 28 oder deren Beschichtung verwendeten Materialien das Sekundärharz nicht anhaftet, kann der Sensor 20 weiterhin im Zuge einer Wartung oder Reparatur der elektrische Maschine 10 ausgetauscht werden.

Während einer, an die Expansion anschließenden Abkühlung der Hohlkörper 34 verfestigen sich deren Außenhüllen 36 wieder, sodass das expandierte Volumen der Hohlkörper 34 im Wesentlichen aufrechterhalten wird. Ein Schrumpfen der Füllung ist somit nicht zu befürchten, da die Hohlkörper 34 beim Abkühlen nicht schrumpfen.

Durch die Expansion der Hohlkörper 34 erhöht sich der Druck innerhalb der Matrix 32. Da das expandierte Volumen der Hohlkörper 34 beim Abkühlen im Wesentlichen erhalten bleibt, verbleibt auch nach dem Abkühlen ein erhöhter Druck innerhalb der Matrix 32, welcher die Anschlussleitungen 22 innerhalb des Stators 12 oder des Rotors 40 und im Speziellen innerhalb der Hülle 28 permanent fixiert. Durch diesen Druck innerhalb der Matrix 32 können auch Wärmedehnungen des Stators 12, des Rotors 40, der Anschlussleitungen 22 oder von dazwischen angeordneten Bauteilen, wie z. B. der Hülle 28 ausgeglichen werden. Durch die Fixierung der Anschlussleitungen 22 wird auch eine Bewegung des Sensors 20 während des Betriebs der elektrischen Maschine 10 verhindert oder zumindest verringert. Aufgrund der Nachexpansion nach dem Einführen des Sensors 20 in den Stator 12 oder Rotor 40 ist eine vollständige Fixierung innerhalb der Hülle 28 gegeben.

Beispielsweise können für die Hohlkörper die unter der Marke Expancel® (AkzoNobel NV.) vertriebenen Mikrohohlkugeln (Microspheres) verwendet werden. Es eignen sich dabei insbesondere Mikrohohlkugeln aus der Produktserie Expancel® DU, im Speziellen die Typen Expancel® 930 DU 120 mit einer Expansions-Starttemperatur von 122 °C bis 132 °C und/oder Expancel® 951 DU 120 mit einer Expansions-Starttemperatur von 133 °C bis 143 °C.

Zusammenfassend kann festgestellt werden, dass der Sensor 20 und die Anschlussleitungen 22 bisher nicht, oder nicht ausreichend innerhalb des Stators 12 oder des Rotors 40 befestigt waren. So konnte der Sensor 20 innerhalb der Hülle 28, also in den darin vorhandenen Freiräumen hin- und herschlagen und dadurch beschädigt werden. Im Besonderen konnte die Bleiglas-Ummantelung, welche den Sensor 20 ummanteln kann und mechanisch sehr empfindlich ist, zu Bruch gehen. Auch ein Fixieren der Anschlussleitungen 22 durch eine Elastomermasse allein kann das Problem nicht dauerhaft lösen, da die Elastomermasse nicht vorgespannt ist, und somit Wärmedehnungen angrenzender Bauteile nicht optimal ausgleichen kann.

Erst durch die Füllung 30, welche die Matrix 32 und die Hohlkörper 34 aufweist, kann der Sensor 20 dauerhaft innerhalb des Stators 12 oder des Rotors 40 und im Speziellen innerhalb der Hülle 28 fixiert werden. Durch die Fixierung der Lage des Sensors 20 ist ein Hin- und Herschlagen innerhalb der Hülle 28 nicht mehr möglich. Da die Matrix 32 durch die, innerhalb der elektrischen Maschine 10 expandierten Hohlkörper 34 vorgespannt ist, können auch Wärmedehnungen angrenzender Bauteile optimal ausgeglichen werden. Mechanische Einflüsse wie z. B. Stöße werden durch die Matrix 32 in Kombination mit den expandierten Hohlkörpern 34 abgedämpft. Zudem wird ein Eindringen von Feuchtigkeit oder anderen Medien von außerhalb des Stators 12 oder des Rotors 40 zum Sensor 20 vermieden. Ebenso werden äußere Temperatureinflüsse, welche die Messergebnisse verfälschen könnten, vom Sensor 20 abgeschirmt.

### Bezugszeichenliste

- 10: elektrische Maschine
- 12: Stator
- 14: Statorkern
- 16: Wicklung
- 18: Wickelkopf
- 20: Sensor
- 22: Anschlussleitung
- 24: Hohlraum
- 26: Glas-Ummantelung
- 28: Hülle
- 29: Öffnung
- 30: Füllung
- 32: Matrix
- 34: Hohlkörper
- 36: Außenhülle
- 38: Expansionsmittel
- 40: Rotor
- 42: Sekundärbeschichtung
- 44: Magnete
- 46: Rotorkern

## Patentansprüche

1. Elektrische Maschine (10), umfassend einen Stator (12), einen Rotor (40), einen Sensor (20) und mit dem Sensor (20) verbundene Anschlussleitungen (22), wobei der Sensor (20) und wenigstens ein Teil der Anschlussleitungen (22) innerhalb des Stators (12) oder Rotors (40) angeordnet sind, wobei die elektrische Maschine (10) eine Füllung (30) umfasst und der wenigstens eine Teil der Anschlussleitungen (22) von der Füllung (30) zumindest teilweise umschlossen ist, **dadurch gekennzeichnet, dass** die Füllung (30) eine Matrix (32) und innerhalb der Matrix (32) verteilte, mit einem Expansionsmittel (38) gefüllte, expandierte Hohlkörper (34) aufweist.

2. Elektrische Maschine (10) nach Anspruch 1, wobei eine Außenhülle (36) der Hohlkörper (34) einen Kunststoff aufweist oder aus einem solchen besteht.

3. Elektrische Maschine (10) nach Anspruch 2, wobei der Kunststoff ein Thermoplast ist.

4. Elektrische Maschine (10) nach einem der vorhergehenden Ansprüche, wobei das Expansionsmittel (38) ein Fluid oder ein Fluidgemisch umfasst oder aus diesem besteht.

5. Elektrische Maschine (10) nach Anspruch 4, wobei das Fluid ein Gas und/oder ein Kohlenwasserstoff ist.

6. Elektrische Maschine (10) nach einem der vorhergehenden Ansprüche, wobei die elektrische Maschine (10) eine, zwischen der Füllung (30) und dem Stator (12) oder dem Rotor (40) angeordnete, wenigstens einen Teil der Anschlussleitungen (22) umlaufend ummantelnde Hülle (28) umfasst.

7. Elektrische Maschine (10) nach einem der vorhergehenden Ansprüche, wobei der Sensor (20) innerhalb einer Wicklung (16) des Stators (12) oder Rotors (40) angeordnet ist.

8. Elektrische Maschine (10) nach einem der vorhergehenden Ansprüche, wobei die Matrix (32) ein Elastomer oder ein zähmodifiziertes Epoxidharz umfasst oder ist.

9. Elektrische Maschine (10) nach Anspruch 8, wobei das Elastomer ein Silikon ist.

10. Elektrische Maschine (10) nach Anspruch 9, wobei das Silikon ein Methyl-Polysiloxan-Elastomer oder ein Vinylmethyl-Polysiloxan-Elastomer oder ein Phenylvinylmethyl-Polysiloxan-Elastomer ist.

11. Verfahren zur Herstellung einer elektrischen Maschine (10), wobei das Verfahren die folgenden Schritte umfasst:
- Bereitstellen eines Stators (12) oder eines Rotors (40), eines Sensors (20), von mit dem Sensor (20) verbundenen Anschlussleitungen (22) und einer Füllung (30), welche eine Matrix (32) und innerhalb der Matrix (32) verteilte, mit einem Expansionsmittel (38) gefüllte Hohlkörper (34) aufweist;
- Einbringen des Sensors (20), wenigstens eines Teils der Anschlussleitungen (22) und der Füllung (30) in den Stator (12) oder den Rotor (40);
- Anschließendes Erwärmen der Hohlkörper (34) auf eine Temperatur, welche höher als eine Expansions-Starttemperatur der Hohlkörper (34) ist.

12. Verfahren nach Anspruch 11, ferner umfassend einen dem Einbringen vorangehenden Schritt des Beschichtens wenigstens eines Teils der Anschlussleitungen (22) mit der Füllung (30).

13. Verfahren nach Anspruch 12, ferner umfassend einen dem Einbringen vorangehenden Schritt des Vorhärtens der Matrix (32) der Füllung (30).

14. Verfahren nach Anspruch 13, ferner umfassend einen Schritt des umlaufenden Umhüllens mit einer Hülle (28) wenigstens des Teils der Anschlussleitungen (22) mitsamt der Füllung (30).

15. Verfahren nach einem der Ansprüche 11 bis 14, ferner umfassend einen, dem Einbringen des Sensors (20) nachfolgenden Schritt des Beschichtens des Stators (12) oder Rotors (40) mit einer Sekundärbeschichtung (42).

## Claims

1. Electrical machine (10), comprising a stator (12), a rotor (40), a sensor (20) and connection lines (22) connected to the sensor (20), wherein the sensor (20) and at least one part of the connection lines (22) are arranged within the stator (12) or rotor (40), wherein the electrical machine (10) comprises a filler (30) and the at least one part of the connection lines (22) is at least partially enclosed by the filler (30), **characterized in that** the filler (30) has a matrix (32) and, distributed within the matrix (32), expanded hollow bodies (34) filled with an expansion medium (38).

2. Electrical machine (10) according to Claim 1, wherein an outer shell (36) of the hollow bodies (34) has or consists of a synthetic material.

3. Electrical machine (10) according to Claim 2, wherein the synthetic material is a thermoplastic.

4. Electrical machine (10) according to one of the preceding claims, wherein the expansion medium (38) comprises or consists of a fluid or a fluid mixture.

5. Electrical machine (10) according to Claim 4, wherein the fluid is a gas and/or a hydrocarbon.

6. Electrical machine (10) according to one of the preceding claims, wherein the electrical machine (10) comprises a shell (28) that is arranged between the filler (30) and the stator (12) or the rotor (40) and circumferentially encloses at least one part of the connection lines (22).

7. Electrical machine (10) according to one of the preceding claims, wherein the sensor (20) is arranged within a winding (16) of the stator (12) or rotor (40) .

8. Electrical machine (10) according to one of the preceding claims, wherein the matrix (32) comprises or is an elastomer or a toughness-modified epoxy resin.

9. Electrical machine (10) according to Claim 8, wherein the elastomer is a silicone.

10. Electrical machine (10) according to Claim 9, wherein the silicone is a methylpolysiloxane elastomer or a vinylmethylpolysiloxane elastomer or a phenylvinylmethylpolysiloxane elastomer.

11. Method for manufacturing an electrical machine (10), wherein the method comprises the following steps:
- providing a stator (12) or a rotor (40), a sensor (20), connection lines (22) connected to the sensor (20), and a filler (30) which has a matrix (32) and, distributed within the matrix (32), hollow bodies (34) filled with an expansion medium (38);
- introducing the sensor (20), at least part of the connection lines (22) and the filler (30) into the stator (12) or the rotor (40);
- subsequently heating the hollow bodies (34) to a temperature above an expansion initiation temperature of the hollow bodies (34).

12. Method according to Claim 11, further comprising, prior to the introduction step, a step of coating at least part of the connection lines (22) with the filler (30).

13. Method according to Claim 12, further comprising, prior to the introduction step, a step of pre-curing the matrix (32) of the filler (30).

14. Method according to Claim 13, further comprising a step of circumferentially encasing, with a shell (28), at least that part of the connection lines (22) together with the filler (30).

15. Method according to one of Claims 11 to 14, further comprising, after the introduction of the sensor (20), a step of coating the stator (12) or rotor (40) with a secondary coating (42).

## Revendications

1. Machine électrique (10), comprenant un stator (12), un rotor (40), un capteur (20) et des lignes de raccordement (22) connectées au capteur (20), dans laquelle le capteur (20) et au moins une partie des lignes de raccordement (22) sont disposés à l'intérieur du stator (12) ou du rotor (40), dans laquelle la machine électrique (10) comprend un élément de remplissage (30) et ladite au moins une partie des lignes de raccordement (22) est au moins partiellement entourée par l'élément de remplissage (30), **caractérisée en ce que** l'élément de remplissage (30) présente une matrice (32) et des corps creux expansés (34) répartis à l'intérieur de la matrice (32) et remplis d'un agent d'expansion (38).

2. Machine électrique (10) selon la revendication 1, dans laquelle une enveloppe extérieure (36) des corps creux (34) présente une matière plastique ou en est constituée.

3. Machine électrique (10) selon la revendication 2, dans laquelle la matière plastique est un thermoplastique.

4. Machine électrique (10) selon l'une quelconque des revendications précédentes, dans laquelle l'agent d'expansion (38) comprend un fluide ou un mélange de fluides ou en est constitué.

5. Machine électrique (10) selon la revendication 4, dans laquelle le fluide est un gaz et/ou un hydrocarbure.

6. Machine électrique (10) selon l'une quelconque des revendications précédentes, dans laquelle la machine électrique (10) comprend une enveloppe (28) disposée entre l'élément de remplissage (30) et le stator (12) ou le rotor (40) et entourant en périphérie au moins une partie des lignes de raccordement (22).

7. Machine électrique (10) selon l'une quelconque des revendications précédentes, dans laquelle le capteur (20) est disposé à l'intérieur d'un enroulement (16) du stator (12) ou du rotor (40).

8. Machine électrique (10) selon l'une quelconque des revendications précédentes, dans laquelle la matrice (32) comprend ou est un élastomère ou une résine époxy à ténacité modifiée.

9. Machine électrique (10) selon la revendication 8, dans laquelle l'élastomère est un silicone.

10. Machine électrique (10) selon la revendication 9, dans laquelle le silicone est un élastomère polysiloxane-méthyle ou un élastomère polysiloxane-vinyle-méthyle ou un élastomère polysiloxane-phényle-vinyle-méthyle.

11. Procédé de fabrication d'une machine électrique (10), dans lequel le procédé comprend les étapes suivantes:
- préparer un stator (12), un rotor (40), un capteur (20), des lignes de raccordement (22) connectées au capteur (20) et un élément de remplissage (30), qui présente une matrice (32) et des corps creux (34) répartis à l'intérieur de la matrice (32) et remplis d'un agent d'expansion (38);
- introduire le capteur (20), au moins une partie des lignes de raccordement (22) et l'élément de remplissage (30) dans le stator (12) ou le rotor (40);
- chauffer ensuite les corps creux (34) à une température, qui est plus élevée que la température de début d'expansion des corps creux (34).

12. Procédé selon la revendication 11, comprenant en outre, avant l'introduction, une étape de recouvrement d'au moins une partie des lignes de raccordement (22) avec l'élément de remplissage (30).

13. Procédé selon la revendication 12, comprenant en outre, avant l'introduction, une étape de durcissement primaire de la matrice (32) de l'élément de remplissage (30) .

14. Procédé selon la revendication 13, comprenant en outre une étape de gainage périphérique avec une enveloppe (28) d'au moins une partie des lignes de raccordement (22) ainsi que de l'élément de remplissage (30) .

15. Procédé selon l'une quelconque des revendications 11 à 14, comprenant en outre, à la suite de l'introduction du capteur (20), une étape de recouvrement du stator (12) ou du rotor (40) avec un revêtement secondaire (42).
